Europäisches Patentamt

European Patent Office

Office européen des brevets

(19)

(11) Numéro de publication : **0 200 598 B1**

# FASCICULE DE BREVET EUROPEEN

(12)

(45) Date de publication du fascicule du brevet :
**16.01.91 Bulletin 91/03**

(51) Int. Cl.⁵ : **G01S 1/56**

(21) Numéro de dépôt : **86400663.0**

(22) Date de dépôt : **27.03.86**

---

(54) **Procédé et dispositif de surveillance d'une station d'un système d'aide à l'atterrissage de type MLS.**

---

(30) Priorité : **29.03.85 FR 8504852**

(43) Date de publication de la demande :
**10.12.86 Bulletin 86/45**

(45) Mention de la délivrance du brevet :
**16.01.91 Bulletin 91/03**

(84) Etats contractants désignés :
**DE GB IT NL**

(56) Documents cités :
**MICROWAVE JOURNAL, vol. 24, no. 5, mai 1981, pages 113-120, Dedham, US; B. LETOQUART: "The MLS in France"**
**THE RADIO AND ELECTRONIC ENGINEER, vol. 33, no. 1, janvier 1967, pages 45-50, Londres, GB; F.G. FERNAU: "I.L.S. transmitter monitors for automatic blind landing"**

(73) Titulaire : **THOMSON-CSF**
**51, Esplanade du Général de Gaulle**
**F-92800 Puteaux (FR)**

(72) Inventeur : **Brault, Daniel**
**THOMSON-CSF SCPI 19, avenue de Messine**
**F-75008 Paris (FR)**
Inventeur : **Grousseau, Alain**
**THOMSON-CSF SCPI 19, avenue de Messine**
**F-75008 Paris (FR)**

(74) Mandataire : **Benoit, Monique et al**
**THOMSON-CSF SCPI**
**F-92045 PARIS LA DEFENSE CEDEX 67 (FR)**

---

**Description**

La présente invention a pour objet un procédé et un dispositif de surveillance d'une station d'un système d'aide à l'atterrissage de type MLS (pour "Microwave Landing System" c'est-à-dire système d'atterrissage hyperfréquence), dont les circuits d'émission sont doublés.

Les systèmes d'aide à la navigation aérienne, et plus particulièrement les systèmes d'atterrissage, doivent offrir le maximum de sécurité, du fait de leur fonction. La structure de ces systèmes comprend alors les ensembles fonctionnels suivants :

– un ensemble de circuits d'émission du signal de guidage ;

– un aérien ;

– un dispositif de surveillance

Le dispositif de surveillance est chargé de vérifier la conformité des paramètres du signal de guidage émis avec les normes édictées par l'O.A.C.I. (Organisation de l'Aviation Civile Internationale). En cas d'écart trop important, le dispositif de surveillance doit arrêter l'émission.

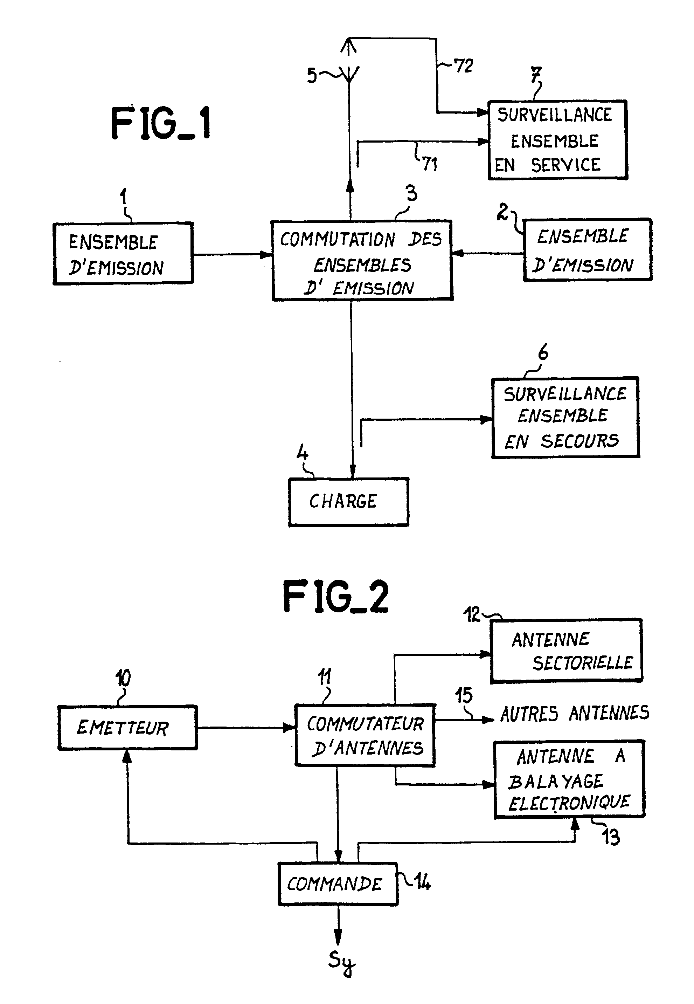

Il est connu, notamment pour les systèmes d'aide à l'atterrissage de type ILS (pour "Instrument Landing System" c'est-à-dire système d'atterrissage aux instruments), de doubler les ensembles d'émission afin d'augmenter la disponibilité de l'ensemble du système. Une telle configuration est représentée sur la figure 1.

Sur cette figure 1, les deux ensembles d'émission distincts sont repérés 1 et 2 ; ils peuvent être l'un ou l'autre connectés à un aérien 5 grâce à un dispositif de commutation 3 ; l'autre ensemble d'émission est alors connecté à une charge 4. Le système comporte en outre deux ensembles de surveillance : le premier, repéré 7, est affecté à la surveillance de l'ensemble d'émission en service, c'est-à-dire celui qui est réuni à l'aérien 5 à un instant donné ; l'ensemble 7 peut comporter par exemple un dispositif assurant la surveillance de l'ensemble d'émission en service avant l'aérien (connexion 71), souvent appelé moniteur interne, et/ou un dispositif assurant la surveillance globale de l'ensemble d'émission en service et de l'aérien (connexion 72), souvent appelé moniteur externe ; le second, ensemble repéré 6, est affecté à la surveillance de l'ensemble d'émission de secours, c'est-à-dire celui qui est relié à la charge 4.

Le fonctionnement des deux ensembles d'émission 1 et 2 est surveillé en permanence par les deux ensembles 6 et 7. Lorsque, par exemple, l'ensemble d'émission en service présente une défectuosité, son ensemble de surveillance (7) provoque, par l'intermédiaire d'un dispositif logique de commande non représenté sur la figure 1, la commutation (3) sur l'aérien 5 de l'autre ensemble d'émission, précédemment en secours ; l'ensemble d'émission précédemment en service est alors soit basculé sur la charge, soit arrêté complètement, selon la gravité de la défectuosité constatée.

Il apparaît qu'une telle structure fait donc appel à deux ensembles de surveillance (6 et 7).

A titre d'exemple, le document The Radio and Electronic Engineer, vol. 33, n° 1, janvier 1967, pages 45-50, Londres, GB ; F. G. Fernau : "ILS transmitter monitors for automatic blind landing" décrit (figure 1) un système ILS utilisant deux émetteurs et deux ensembles de surveillance commutables.

Ce type de structure est couramment utilisé pour le système ILS. Il est également utilisable pour un système de type MLS. Toutefois, ce dernier possède la caractéristique, par rapport au système ILS, d'être conçu autour d'une antenne à balayage électronique. Le système précédent présente alors l'inconvénient de ne pas permettre la vérification du fonctionnement global de l'ensemble d'émission en secours en association avec cette antenne, ce qui est une lacune importante du fait des relatives sophistication et fragilité d'une telle antenne.

Par ailleurs, il est connu du document Microwave Journal, Vol. 24, n° 5, Mai 1981, pages 113-120, Dedham, US ; B. Letoquart : "The MLS in France", un système MLS comportant un système de surveillance unique.

La présente invention a pour objet un procédé et un dispositif qui soient adaptés au système MLS, c'est-à-dire qui en surveillent tous les constituants, y compris l'antenne à balayage électronique, et, ce, dans des conditions opérationnelles.

Elle consiste principalement à utiliser deux ensembles d'émission distincts, connectés alternativement par un ensemble de surveillance à l'antenne de balayage électronique, comportant des moyens captant le signal effectivement émis par cette antenne ; les signaux captés sont testés par l'ensemble de surveillance, qui commandent alors la commutation des ensembles d'émission et les déclare, le cas échéant, indisponibles.

Cette structure présente donc, en outre, l'avantage de ne nécessiter qu'un seul ensemble de surveillance.

Plus précisément, l'invention a pour objet un procédé tel que défini par la revendication 1 et un dispositif pour la mise en oeuvre de ce procédé, tel que défini par la revendication 10.

D'autres objets, particularités et résultats de l'invention ressortiront de la description suivante, illustrée par les dessins annexés qui représentent :

– la figure 1, déjà décrite, un système de surveillance selon l'art antérieur ;

– la figure 2, le schéma synoptique d'une station d'un système du type MLS ;

– la figure 3, le schéma de l'ensemble de surveillance selon l'invention dans ses relations avec différents éléments constituant une station MLS ;

– les figures 4 <u>a</u> à <u>c</u>, différents diagrammes se

rapportant au fonctionnement de l'ensemble selon l'invention.

Sur ces différentes figures, les mêmes références se rapportent aux mêmes éléments.

La figure 2 est donc le schéma synoptique général d'une station de type MLS, en dehors de tout moyen de surveillance du fonctionnement de la station.

On rappelle que le système MLS est un système permettant d'aider un avion à l'atterrissage en lui fournissant différentes informations, appelées "fonctions", telle que son angle d'azimut par rapport à l'axe de la piste, son angle de site par rapport à l'horizontale, éventuellement d'autres fonctions annexes, et un certain nombre de données, les unes dites de base et les autres dites auxiliaires. Ces différentes informations sont émises à partir du sol en permanence et selon une succession, ou "cycle", prédéfinie et répétitive, en multiplexage temporel sur une même fréquence, selon des caractéristiques normalisées par l'O.A.C.I.. Ces informations sont décodées par chaque avion intéressé.

Chacune des fonctions précédentes se décompose en deux parties, émises successivement et constituant un "module" :
– un préambule, dont le rôle est de fournir à l'avion une identification de la fonction qui va suivre ; ce préambule est émis par une antenne dite sectorielle, c'est-à-dire une antenne fixe émettant dans l'ensemble de la zone, ou secteur, que le système MLS doit couvrir ; ce préambule se présente sous la forme d'un mot binaire, émis en modulation de phase DPSK ;
– la fonction proprement dite : dans le cas où cette fonction est une donnée, elle est émise par l'antenne sectorielle, également en modulation de phase DPSK ; dans le cas ou cette fonction est une information angulaire, elle est fournie par le balayage angulaire de tout le secteur de couverture du système MLS par un faisceau étroit, en aller puis en retour, réalisé à l'aide d'une antenne à balayage électronique, selon le principe dit du faisceau battant à référence temporelle.

Un système MLS comporte une pluralité de stations, en général une par fonction angulaire, certaines de ces stations assurant de plus l'émission des données.

Le schéma de la figure 2 comporte un émetteur 10 d'une onde à environ 5 GHz, dirigée par l'intermédiaire d'un circuit de commutation 11 soit vers une antenne sectorielle 12, soit vers une antenne à balayage électronique 13, soit vers (flèche 15) d'autres antennes annexes (antennes dites OCI par exemple). Les éléments 10, 11 et 13 sont commandés par un organe de commande 14.

Plus précisément, l'émetteur 10 comporte, connectés en cascade :
– un générateur de fréquence, fournissant une onde voisine de 5 GHz ;

– un modulateur de phase, réalisant la modulation DPSK, permettant d'émettre le préambule et les données sur commande de l'organe 14 ;
– un circuit de commande marche/arrêt, réalisé par exemple par un modulateur d'amplitude, également commandé par l'organe 14 ;
– un émetteur de puissance, chargé de fournir la puissance requise, classiquement de l'ordre de 20 Watts.

L'antenne à balayage électronique 13 comporte classiquement les éléments suivants : N éléments rayonnants ; des déphaseurs numériques alimentant les éléments rayonnants ; un diviseur de puissance par N, recevant l'énergie fournie par l'émetteur 10, et un circuit de commande des déphaseurs numériques.

L'organe de commande 14 a pour fonction principalement d'assurer la commande des blocs précédents, notamment d'assurer la fonction logique de balayage pour l'antenne 13 et assurer la liaison avec les autres stations du système MLS à des fins de synchronisation. Il est réalisé par exemple à l'aide d'un microprocesseur.

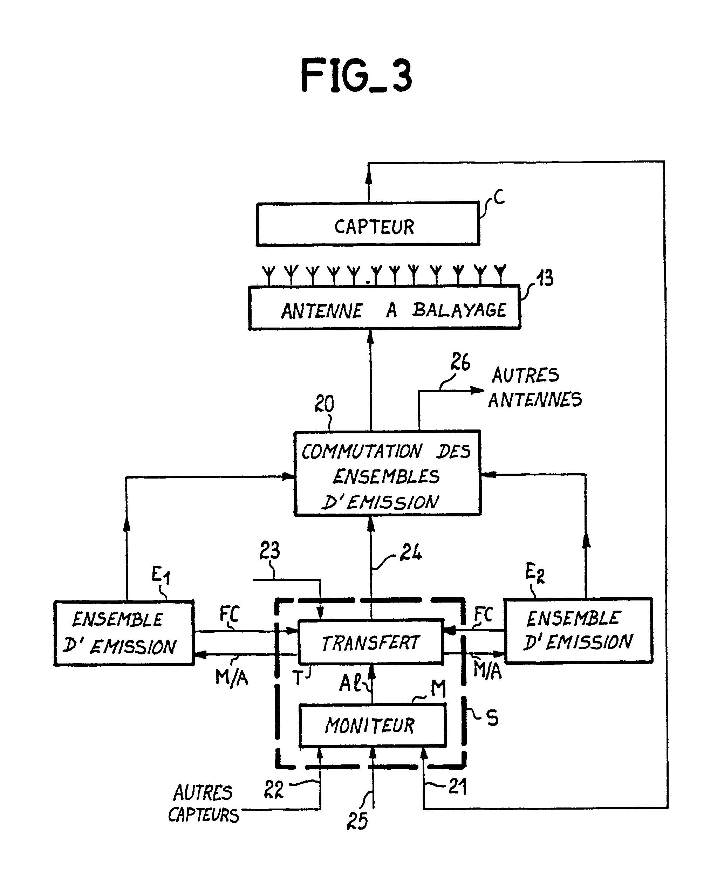

La figure 3, représente schématiquement l'ensemble de surveillance selon l'invention dans ses relations avec différents éléments constitutifs d'une station MLS.

Sur cette figure, on retrouve donc l'antenne à balayage électronique 13 et on a schématisé par un bloc $E_1$ l'ensemble des blocs émetteur 10 et commande 14 de la figure 2 ; ce bloc $E_1$ est appelée ensemble d'émission. La station MLS comporte deux tels ensembles d'émission, le second étant repéré $E_2$; ces deux ensembles sont susceptibles d'être reliés à l'antenne à balayage 13 et aux autres antennes de la station MLS (flèche 26) par l'intermédiaire d'un ensemble de circuits de commutation repérés globalement 20 ; cet ensemble 20 peut être constitué à partir du circuit de commutation d'antennes 11 de la figure 2.

Le système de la figure 3 comporte en outre un ensemble de surveillance S, recevant un certain nombre d'informations et, notamment, le signal émis par l'antenne 13 tel que reçu par un capteur C. Ce capteur C peut être constitué soit par un capteur externe, par exemple du type cornet, analogue au récepteur porté par les avions à guider, placé à quelques dizaines de mètres de l'antenne 13 ; il peut être constitué également, alternativement ou cumulativement avec le précédent, d'un dispositif de prélèvement du signal situé au niveau de l'antenne à balayage elle même, connu sous le nom de "moniteur intégral".

L'ensemble de surveillance S se décompose en un ensemble de circuits appelés globalement "moniteur", repérés M, et un ensemble de circuits globalement appelés "transfert", repérés T. Le moniteur M a pour fonction d'effectuer des tests prédéfinis sur les informations qu'il reçoit de différents capteurs, c'est-à-dire d'effectuer des mesures sur ces informations et de les comparer à des valeurs de référence qu'il a en mémoire ; lorsque les différences entre les résultats de mesures et les valeurs de référence excèdent des limites prédéfinies, le moniteur M fournit une alarme au transfert T, indiquant à ce dernier que l'ensemble d'émission en service ($E_1$ ou $E_2$) est défectueux. Afin d'améliorer la fiabilité du système, le moniteur M peut être doublé, ou plus. Le transfert T est un organe de commande, qui gère la commutation (ou "transfert") des ensembles $E_1$ et $E_2$ sur l'antenne 13, en fonction du choix de l'opérateur responsable de la gestion de la station MLS, (choix portant notamment sur l'ensemble d'émission normalement en service et sur le programme de tests à utiliser), du programme de tests choisi et des alarmes reçues.

Plus précisément, le moniteur M reçoit sur une entrée 21 le signal capté par le capteur C ; il peut également recevoir des informations sur d'autres entrées, globalement repérées 22, provenant d'autres capteurs qui prélèvent de toute façon connue, à leur sortie, les différents signaux engendrés par la station MLS, tels que la commande des déphaseurs, le signal DPSK, le signal de liaison avec les autres stations, etc. Dans une variante de réalisation, le moniteur M reçoit en outre sur une entrée 25 des informations de contrôle provenant du commutateur 20, permettant de vérifier le fonctionnement effectif de ce dernier.

Le dispositif de transfert T reçoit les alarmes (Al) fournies par le moniteur M, des informations de fin de cycle (FC) de chacun des ensembles d'émission $E_1$ et $E_2$ à tour de rôle, et il peut recevoir des informations extérieures (des commandes) sur une entrée 23. Ces commandes extérieures proviennent d'un opérateur situé soit dans la station, soit à distance, dans la tour de contrôle par exemple : il s'agit alors de télécommandes ; elles portent notamment sur l'ordre de marche/arrêt de la station, le mode de fonctionnement automatique ou manuel (dans lequel l'effet des alarmes est inhibé) de la station, le choix d'un programme de tests, éventuellement le choix de l'un des ensembles $E_1$ et $E_2$ pour assurer l'émission normale de la station, en dehors des périodes de tests de l'autre ensemble. Le transfert T fournit (flèche 24) au dispositif de commutation 20 l'ordre de sélection de l'ensemble $E_1$ ou de l'ensemble $E_2$ ; il fournit également à chacun des ensembles $E_1$ et $E_2$ un ordre de marche/arrêt (M/A).

Les alarmes (Al) fournies par le moniteur M au transfert T sont, dans ce mode de réalisation, de plusieurs types :
- des alarmes dites primaires, qui sont des alarmes graves indiquant une détérioration du signal telle que l'émission de l'ensemble en service doit être arrêtée; ce type d'alarme est déclenché par exemple lorsque l'erreur d'indication angulaire devient supérieure à un seuil prédéfini, lorsque le taux d'erreur dans le préambule devient supérieur à un certain seuil, lorsque se produit un recouvrement des différentes fonctions MLS ;

- des alarmes dites secondaires, qui correspondent à des défectuosités ne nécessitant pas un arrêt de l'émission mais qu'il est nécessaire de tenter de faire cesser par le choix du meilleur des deux ensembles disponibles ; elles concernent des paramètres de moindre importance ou elles constituent des avertissements à une alarme primaire future, telle qu'une baisse de la puissance d'émission ;
- des pré-alarmes, qui sont associées aux alarmes primaires et aux alarmes secondaires et qui sont déclenchées sur un seuil inférieur au seuil de déclenchement des précédentes ; elles n'ont pas d'action sur le fonctionnement mais sont seulement mémorisées à des fins de maintenance ;
- des "désaccords" entre deux ou plusieurs moniteurs, lorsque le moniteur M est multiplié.

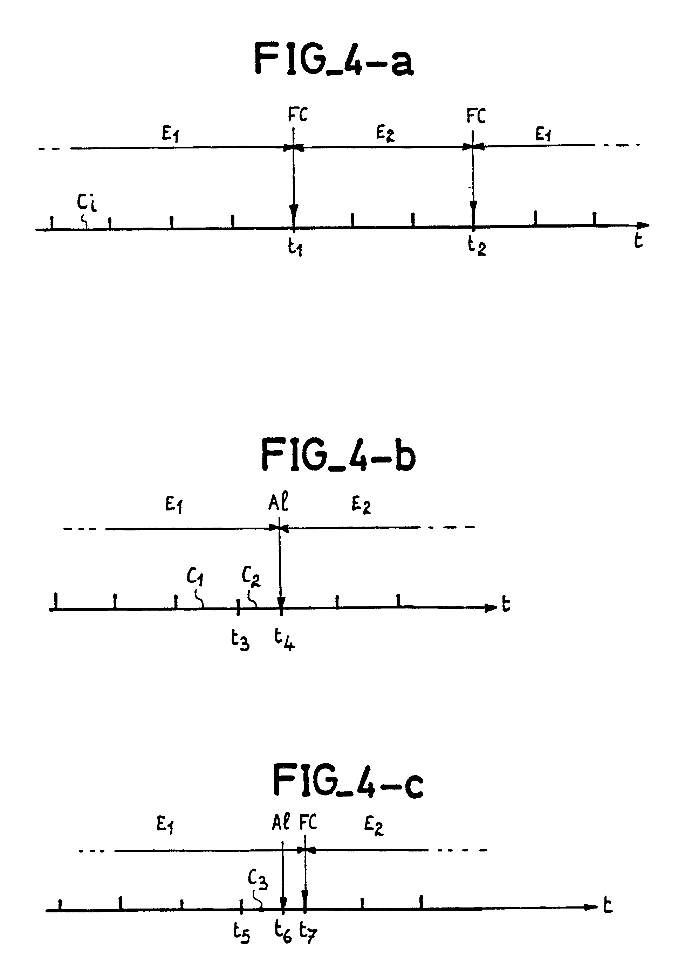

On a représenté sur la figure 4 différents diagrammes illustrant, en fonction du temps (t), le mode de commutation d'un ensemble d'émission à l'autre dans le système selon l'invention.

La figure 4a, représente un cas de fonctionnement normal. L'un des ensembles d'émission, par exemple l'ensemble $E_1$ est utilisé comme ensemble normalement en service et émet successivement ses informations, cycle après cycle. On a représenté à titre d'exemple quatre cycles MLS dont l'un est repéré $C_i$. A un instant $t_1$, qui correspond à une fin de cycle, l'ensemble d'émission en service ($E_1$) envoie un signal de fin de cycle (FC) au circuit de transfert T ; celui-ci commande (commande 24) au circuit de commutation 20 de connecter l'ensemble de secours (dans notre exemple l'ensemble $E_2$) aux antennes et notamment à l'antenne à balayage 13, et ce pour un nombre entier et limité de cycles : dans l'exemple de la figure 4a, pour trois cycles, le troisième s'achevant à un instant $t_2$. A l'instant $t_2$, l'ensemble $E_2$ envoie à son tour une information de fin de cycle (FC) au circuit de transfert T qui commande alors, par l'intermédiaire du circuit de commutation 20, la reconnexion du premier ensemble ($E_1$) à l'antenne 13.

De la sorte, chacun des deux ensembles d'émission $E_1$ et $E_2$ est connecté alternativement aux antennes et peut être testé dans tous ses paramètres. Dans le mode de fonctionnement décrit ci-dessus, l'ensemble de secours n'est donc connecté à l'antenne 13 que pour quelques cycles, afin d'être testé, l'ensemble en service assurant la majeure partie des émissions. D'autres modes de fonctionnement sont bien entendu possibles, dans lesquels l'émission normale de la station est répartie entre les deux ensembles d'émission, selon une proportion choisie par l'opérateur.

Le diagramme de la figure 4b illustre un cas de détection d'alarme primaire. Jusqu'à l'instant $t_3$, l'ensemble en service (par exemple toujours l'ensemble $E_1$) fonctionne de façon satisfaisante. Le dernier cycle avant l'instant $t_3$ est repéré $C_1$. A l'instant $t_3$ commence un cycle $C_2$ au cours duquel intervient, à un instant t₄, une alarme primaire AI détectée par le moniteur M. Selon l'invention, le transfert T commande alors instantanément, sans attendre la fin du cycle MLS, la commutation de l'ensemble de secours (E₂) sur les antennes : en effet, ainsi qu'il l'a été dit plus haut, une alarme primaire correspond à une défectuosité telle que le fonctionnement de la station, ou au moins de son ensemble d'émission, doit être arrêté afin de ne pas diffuser une information erronée. A ce moment, l'ensemble E₂ devient l'ensemble en service et, ce, de façon en principe définitive, sous réserve d'une alarme primaire intervenant utilérieurement sur l'ensemble E₂, cette dernière alarme entraînant alors l'arrêt de la station.

Le diagramme de la figure 4c illustre le cas d'une alarme secondaire. Jusqu'à un instant t₅, l'ensemble en service (E₁, par exemple) fonctionne de façon satisfaisante. A l'instant t₅ commence un cycle repéré C₃ au cours duquel, à un instant t₆, une alarme secondaire est fournie par le moniteur M à destination du transfert T. Dans ce cas, contrairement au cas de la figure 4b, le transfert T attend de recevoir une information de fin de cycle FC, ce qui arrive à un instant t₇, avant de commander la commutation des antennes (notamment 13) sur l'ensemble de secours (E₂). A partir de l'instant t₇, c'est l'ensemble de secours (E₂) qui assure l'émission de la station et qui devient l'ensemble en service.

Les commutations systématiques à des fins de tests continuent néanmoins à être effectuées de façon à permettre de reconsidérer périodiquement l'état de l'ensemble précédemment en service (E₁). Les états respectifs des deux ensembles E₁ et E₂, qui sont ainsi connus de façon séquentielle, sont mémorisés et comparés en permanence et c'est le meilleur des deux ensembles qui est relié aux antennes, l'autre ensemble continuant à être testé périodiquement, tant que n'apparaît pas une alarme primaire. Dans un mode de réalisation, si les deux ensembles sont dans le même état (absence d'alarme ou alarme secondaire), le transfert T commande le retour sur l'ensemble initial (E₁). Parallèlement à ce qui précède, dans un mode de réalisation, toutes les alarmes secondaires relatives à un même ensemble E sont regroupées et le choix du meilleur ensemble se fait en fonction de la présence ou de l'absence d'alarme(s) secondaire(s). Dans un autre mode de réalisation, le choix du meilleur ensemble d'émission est effectué, de façon plus élaborée, en fonction du nombre d'alarmes secondaires enregistrées pour chaque ensemble, nombre éventuellement pondéré par un coefficient de qualité prédéfini.

Afin de commander le fonctionnement décrit figure 4, le transfert T reçoit, ainsi qu'il est dit ci-dessus, l'ensemble des alarmes primaires, qu'il regroupe, l'ensemble des alarmes secondaires, qu'il regroupe ou non selon le mode de fonctionnement retenu, des commandes extérieures (entrée 23) qui lui permettent notamment d'initialiser le système et de commander sa marche/arrêt. Il est constitué par un circuit logique formé à partir d'un tableau du type table de vérité, donnant la correspondance entre les signaux reçus en entrée et les fonctionnements désirés dans les différents cas possibles, fonctionnements tels que marche/arrêt de l'ensemble E₁, marche/arrêt de l'ensemble E₂, commande de commutation de l'ensemble E₁ vers l'ensemble E₂ ou réciproquement. Un ensemble tel que T peut être réalisé à l'aide d'un microprocesseur ou par circuits logiques câblés.

Par ailleurs, il est à noter que certaines anomalies ne donnent pas lieu immédiatement à une alarme : elles sont filtrées et l'alarme correspondante n'apparaît, le cas échéant, qu'après une durée T₀. Lors d'une commutation d'un ensemble d'émission E sur l'autre, il est donc nécessaire d'inhiber pendant la durée T₀ les éventuelles alarmes émises par le moniteur M à l'intention du transfert T : on ne saurait pas en effet, pendant la durée T₀, à quel ensemble d'émission l'attribuer. Ce retard T₀ imposé à certaines alarmes doit toutefois être déterminé de sorte à être compatible avec la réglementation de l'O.A.C.I. concernant la durée maximale tolérée pour une émission hors normes.

Il ressort de ce qui précède que chacun des ensembles d'émission E₁ et E₂ fonctionne à tour de rôle, la commutation (systématique) se faisant en principe en fin du cycle MLS, sauf en cas d'alarme primaire où l'ensemble de secours est immédiatement mis en service, mais reprend dans tous les cas le cycle interrompu à son début. Ce mode de fonctionnement a le double avantage de permettre de tester les deux ensembles d'émission et d'éviter toute nécessité de synchronisation entre les ensembles, tout en offrant à l'avion un signal sans discontinuité lorsqu'il n'apparaît pas de défectuosité grave. En effet, le signal de fin de cycle FC n'est pas un signal de synchronisation mais une référence temporelle indiquant l'instant auquel doit être effectuée la commutation.

Par ailleurs, il est à noter que la commutation n'a pas obligatoirement à être faite en fin de cycle MLS : elle peut être réalisée à tout moment à condition de ne pas perturber l'émission de la station MLS au delà de ce qui est admis par les normes O.A.C.I.. A titre d'exemple, la commutation systématique peut être réalisée au milieu d'un cycle, mais à la fin d'un module.

Le système selon l'invention présente en outre les avantages suivants :
– il contrôle le signal émis réellement par les antennes par l'ensemble en service ;
– il contrôle en outre le signal émis par l'ensemble de secours sur les mêmes antennes, également en conditions opérationnelles, ces deux aspects étant particulièrement importants dans le cas où une antenne à balayage électronique est concernée ;

– il ne nécessite qu'un seul ensemble de surveillance, ce qui permet, d'une part, une diminution des coûts de matériel par rapport à un système tel que celui de la figure 1 et, d'autre part, les fonctions de surveillance étant également remplies par rapport au système de la figure 1, une amélioration de la fiabilité de l'ensemble du système ;

– le moniteur M peut être par ailleurs doublé (ou plus), en parallèle, mais uniquement pour améliorer la fiabilité du système ;

– l'ensemble d'émission considéré comme "secours" est contrôlé par conception par un moniteur de même intégrité (simple, doublé, ou plus) que l'ensemble en service.

La description qui a été faite ci-dessus l'a été bien entendu à titre d'exemple non limitatif. C'est ainsi notamment qu'on a décrit une station MLS comportant deux ensembles d'émission ($E_1$ et $E_2$), mais que ceux-ci peuvent être multipliés sans modifier le fonctionnement du procédé/dispositif de surveillance selon l'invention. C'est ainsi également qu'on a décrit une information FC donnée à la fin d'un cycle, mais elle peut être fournie à tout moment, sous réserve que l'organe destinataire (le transfert T) recalcule en conséquence l'instant de fin de cycle.

**Revendications**

1. Procédé de surveillance d'une station d'un système d'aide à l'atterrissage de type MLS, la station émettant des informations MLS regroupées en cycles identiques et comportant :

– une antenne (13) à balayage électronique ;

– deux ensembles ($E_1$, $E_2$) d'émission d'informations MLS ;

– des moyens de commutation (20) assurant la liaison des ensembles d'émission à l'antenne ; le procédé étant caractérisé par le fait qu'en fonctionnement normal, les deux ensembles d'émission ($E_1$, $E_2$) sont commutés pour être reliés alternativement à l'antenne (13) par lesdits moyens de commutation (20) de sorte à répartir l'émission de la station entre les deux ensembles, l'un des ensembles étant utilisé comme ensemble en service, selon une proportion déterminée; que les signaux émis par ladite antenne sont reçus par des moyens (C) pour capter ces signaux et sont testés par des moyens de surveillance (S) pour déterminer des alarmes primaires lorsque se produisent des défectuosités de fonctionnement correspondant à une détérioration des signaux émis telle que l'émission de l'ensemble en service doive être arrêtée, et que ledit ensemble de surveillance commande la commutation des ensembles d'émission pour arrêter l'émission de l'ensemble ayant fait l'objet d'une telle alarme et la mise en service de l'ensemble n'ayant pas fait l'objet de cette alarme.

2. Procédé selon la revendication 1, caractérisé par le fait que, en fonctionnement normal, la commutation intervient en fin de cycle.

3. Procédé selon l'une des revendications précédentes, caractérisé par le fait que les défectuosités de fonctionnement sont classées en catégories, et que le classement comporte lesdites alarmes primaires dont l'apparition entraîne la commutation immédiate des ensembles d'émission.

4. Procédé selon la revendication 3, caractérisé par le fait que la commutation des ensembles d'émission provoquées par l'apparition d'une alarme primaire est définitive, l'ensemble ayant fait l'objet de l'alarme étant arrêté.

5. Procédé selon l'une des revendications précédentes, caractérisé par le fait que les défectuosités sont classées en catégories et que le classement comporte des alarmes secondaires dont l'apparition entraîne la commutation des ensembles d'émission à la fin du cycle en cours.

6. Procédé selon la revendication 5, caractérisé par le fait qu'il comporte une étape de mémorisation des alarmes secondaires, permettant la comparaison des deux ensembles d'émission à chaque instant.

7. Procédé selon la revendication 6, caractérisé par le fait que lorsque les deux ensembles d'émission ont donné naissance à des alarmes secondaires, la commutation des ensembles est réalisée comme en fonctionnement normal.

8. Procédé selon l'une des revendications précédentes, caractérisé par le fait que lorsqu'un ensemble d'émission est mis en service après détection d'une défectuosité de fonctionnement, il commence son émission en début de cycle.

9. Procédé selon l'une des revendications précédentes, caractérisé par le fait que, en fonctionnement normal, ledit ensemble d'émission en service assure la majeure partie des cycles MLS, l'autre ensemble étant considéré comme un ensemble de secours et mis en fonctionnement périodiquement, pour un nombre limité de cycles.

10. Dispositif de surveillance d'une station d'un système d'aide à l'atterrissage de type MLS, pour la mise en oeuvre du procédé selon l'une des revendications précédentes, le dispositif comportant des moyens (C) pour capter des signaux émis par l'antenne (13) et des moyens de surveillance (S) connectés aux moyens précédents (C) et étant caractérisé par le fait que les moyens de surveillance comportent eux-mêmes :

– un ensemble dit moniteur (M), recevant les signaux émis par l'antenne et reçus par les moyens (C) pour les capter, pour réaliser des tests de fonctionnement sur ces signaux et pour engendrer le cas échéant une alarme correspondant à la détection d'une défectuosité de fonctionnement ;
– un ensemble dit transfert (T), recevant lesdites alarmes primaires et agencé pour assurer la commande des moyens de commutation des ensembles d'émission, de façon alternative en fonctionnement normal, et en cas d'alarmes primaires, pour arrêter l'émission de l'ensemble ayant fait l'objet de ladite alarme et pour assurer la mise en service de l'ensemble n'ayant pas fait l'objet de ladite alarme.

## Ansprüche

1. Verfahren zur Überwachung einer Station eines Landehilfesystems vom Typ MLS, wobei die Station in identischen Zyklen gruppierte MLS-Informationen aussendet und

– eine Antenne (13) mit elektronischer Strahlrichtungssteuerung,
– zwei Sendegruppen ($E_1$, $E_2$) für MLS-Informationen, und
– Schaltmittel (20) zur Herstellung der Verbindung der Sendegruppen mit der Antenne aufweist, wobei das Verfahren dadurch gekennzeichnet ist, daß im Normalbetrieb die beiden Sendegruppen ($E_1$, $E_2$) durch die Schaltmittel (20) alternativ an die Antenne (13) angeschaltet werden, derart, daß die Aussendung der Station auf die beiden Gruppen gemäß einem gegebenen Anteilsverhältnis aufgeteilt und eine Gruppe als in Betrieb befindliche Gruppe benutzt wird, daß die von der Antenne ausgesendeten Signale von Mitteln (C) zum Auffangen dieser Signale empfangen und von Überwachungsmitteln (S) überprüft werden, um primäre Alarmzustände zu bestimmen, wenn Funktionsstörungen auftreten, die einer solchen Verschlechterung der ausgesendeten Signale entsprechen, daß die Aussendung der in Betrieb befindlichen Gruppe gestoppt werden muß, und daß die Überwachungsmittel das Umschalten der Sendegruppen bewirkt, um die Aussendung derjenigen Gruppe zu blenden, die Gegenstand eines solchen Alarms war, sowie die Inbetriebnahme derjenigen Gruppe zu veranlassen, die nicht Gegenstand dieses Alarms war.

2. Verfahren nach Anspruch 1, dadurch gekennzeichnet, daß im Normalbetrieb die Umschaltung am Ende eines Zyklus erfolgt.

3. Verfahren nach einem der vorhergehenden Ansprüche, dadurch gekennzeichnet, daß die Funktionsstörungen in Kategorien eingeteilt sind, und daß die Einteilung die Primäralarme einschließt, deren Auftreten die sofortige Umschaltung der Sendegruppen auslöst.

4. Verfahren nach Anspruch 3, dadurch gekennzeichnet, daß die durch das Auftreten eines Primäralarms, verursachte Umschaltung der Sendegruppen endgültig ist, wobei die Gruppe, die Gegenstand des Alarms war, abgeschaltet wird.

5. Verfahren nach einem der vorhergehenden Ansprüche, dadurch gekennzeichnet, daß die Funktionsstörungen in Kategorien eingeteilt sind, und daß die Einteilung Sekundäralarme einschließt, deren Auftreten die Umschaltung der Sendegruppen am Ende des gerade laufenden Zyklus auslöst.

6. Verfahren nach Anspruch 5, dadurch gekennzeichnet, daß es eine Phase der Speicherung der Sekundäralarme aufweist, die in jedem Augenblick den Vergleich der beiden Sendegruppen ermöglicht.

7. Verfahren nach Anspruch 6, dadurch gekennzeichnet, daß, wenn beide Sendegruppen Sekundäralarme ausgelöst haben, die Umschaltung der Gruppen wie im Normalbetrieb erfolgt.

8. Verfahren nach einem der vorhergehenden Ansprüche, dadurch gekennzeichnet, daß eine Sendegruppe, die nach Erfassung einer Funktionsstörung in Betrieb genommen wird, ihre Aussendung am Anfang des Zyklus beginnt.

9. Verfahren nach einem der vorhergehenden Ansprüche, dadurch gekennzeichnet, daß im Normalbetrieb die in Betrieb befindliche Sendegruppe den größeren Teil der MLS-Zyklen durchführt, während die andere Gruppe als Bereitschaftsgruppe betrachtet und periodisch für eine begrenzte Anzahl von Zyklen in Betrieb genommen wird.

10. Einrichtung zur Durchführung des Verfahrens zur Überwachung einer Station eines Landehilfesystems vom Typ MLS nach einem der vorhergehenden Ansprüche, wobei die Einrichtung Mittel (C) zum Auffangen von Signalen der Antenne (13) sowie Überwachungsmittel (S) aufweist, die mit den vorgenannten Mitteln (C) verbunden sind, dadurch gekennzeichnet, daß die Überwachungsmittel ihrerseits aufweisen

– eine sogenannte Monitorgruppe (M), welche die von der Antenne ausgesendeten und von den Auffangmitteln (C) empfangenen Signale empfängt, um an den Signalen Funktionsprüfungen durchzuführen und um nötigenfalls einen Alarm entsprechend der Erfassung der Funktionsstörung auszulösen, und
– eine sogenannte Transfergruppe (T), welche die Primäralarme empfängt und so ausgebildet ist, daß sie im Normalbetrieb die alternative Ansteuerung der Umschaltmittel vornimmt, und im Fall eines Primäralarms die Aussendung derjenigen Gruppe stoppt, die Gegenstand des Alarms war, und die Inbetriebnahme derjenigen Gruppe vornimmt, die nicht Gegenstand des Alarms war.

## Claims

1. A method for monitoring a station of a MSL-type landing assistance system, said station transmitting MLS-information arranged groupwise in identical cycles and comprising

– an electronically swept aerial (13),
– two MLS-information transmitting assemblies $(E_1, E_2)$, and
– switching means (20) ensuring the linkage of the transmitting assemblies with the aerial, characterized in that in normal operation the two transmitting assemblies $(E_1, E_2)$ are switched for being connected alternatively to the aerial (13) by said switching means (20) so as to distribute the transmission of the station among the two assemblies according to a predetermined proportion, of which one assembly is used as operating assembly, that the signals transmitted by said aerial are received by means (C) adapted to intercept these signals, and are tested by monitoring means (S) in order to determine primary alarms, when operational malfunction occurs corresponding to a deterioration of the transmitted signal, such that the transmission of the operating assembly must be stopped, and that said monitoring means trigger the switch-over of the transmitting assemblies in order to stop the transmission of the assembly which has been the subject of such an alarm, and to put into operation the assembly which has not been the subject of said alarm.

2. A method according to claim 1, characterized in that in normal operation, the switching is made at the end of a cycle.

3. A method according to any one of the preceding claims, characterized in that the operational malfunctions are classified by categories, and that said classification comprises said primary alarms, whose occurence results in the immediate switching-over of the transmitting assemblies.

4. A method according to claim 3, characterized in that the switching-over of the transmitting assemblies caused by the occurence of a primary alarm is definitive, with the assembly having been the subject of the alarm being put out of service.

5. A method according to any one of the preceding claims, characterized in that the operational malfunctions are classified by categories, and that said classification comprises secondary alarms, whose occurence results in the switching-over of the transmitting assemblies.

6. A method according to claim 5, characterized in that it comprises a step of storing secondary alarms, which permits the comparison of the two transmitting assemblies to be made at any instant.

7. A method according to claim 6, characterized in that in the event of the two transmitting assemblies having both given raise to a secondary alarm, the switching of the assemblies is made as in case of normal operation.

8. A method according to one of the preceding claims, characterized in that in the event of a transmitting assembly being put into operation after detection of an operational malfunction, this assembly begins transmission at the beginning of a cycle.

9. A method according to any one of the preceding claims, characterized in that in normal operation, said operating transmitting assembly ensures the major part of the MLS-cycles, whereas the other assembly is considered to be an emergency assembly and is put into operation periodically for a limited number of cycles.

10. A device for monitoring a station of a MLS-type landing assistance system, designed for implementing the method according to any one of the preceding claims, the device comprising means (C) for intercepting signals transmitted by the aerial (13), and monitoring means (S) connected to the preceding means (C), characterized in that the monitoring means comprise in turn

– an assembly referred to as monitoring assembly (M), adapted to receive the signals transmitted by the aerial and received by the means (C) for intercepting same, in order to carry out functional tests on the signals and in order to possibly trigger an alarm corresponding to the detection of an operational malfunction, and
– an assembly referred to as transfer assembly (T), adapted to receive said primary alarms and arranged to ensure in normal operation the triggering of the switching means of the transmitting assemblies in an alternating manner, and to stop in case of primary alarms the transmission of the assembly having been the subject of said alarm, and to ensure the putting into operation of the assembly not having been the subject of said alarm.

# FIG_1

ENSEMBLE
EN SERVICE
SURVEILLANCE
7

~72
5

ENSEMBLE
D'EMISSION
1

COMMUTATION DES
ENSEMBLES
D' EMISSION
3

ENSEMBLE
D'EMISSION
2

71

SURVEILLANCE
ENSEMBLE
EN SECOURS
6

CHARGE
4

# FIG_2

ANTENNE
SECTORIELLE
12

EMETTEUR
10

COMMUTATEUR
D'ANTENNES
11

AUTRES ANTENNES
15

ANTENNE A
BALAYAGE
ELECTRONIQUE
13

COMMANDE
14

Sy

# FIG_3

# FIG_4-a

$E_1$    FC    $E_2$    FC    $E_1$

$C_i$

$t_1$    $t_2$    $t$

# FIG_4-b

$E_1$    $A\ell$    $E_2$

$C_1$    $C_2$

$t_3$   $t_4$    $t$

# FIG_4-c

$E_1$    $A\ell$   FC    $E_2$

$C_3$

$t_5$   $t_6$ $t_7$    $t$